# EUROPÄISCHE PATENTANMELDUNG

(11) **EP 0 849 056 A1**
(43) Veröffentlichungstag der Anmeldung: **24.06.1998**
(21) Anmeldenummer: 96890197.5
(22) Anmeldetag: 19.12.1996
(51) Int. Cl.: B27B 31/08, B23D 59/00

(54) **Bandsägemaschine mit Sägebandfreispaltabdeckvorrichtung**

(71) Anmelder: Lindner, David, Ing., 9500 Villach (AT)
(72) Erfinder: Lindner, David, Ing., 9500 Villach (AT)
(74) Vertreter: Casati, Wilhelm, Dipl.-Ing.

(57) **Zusammenfassung**

Die Erfindung betrifft eine Blockbandsägeneinheit, bei welcher das zu schneidende Gut, z.B. Baumstämme, an einer ortsfesten Halterung eingespannt ist und die vertikal schneidend angeordnete Bandsäge entlang des Schneidegutes bewegt wird, und bei welcher zwischen den Umlenkrädern für das Sägeband der Bandsäge eine an der dem aktiven Trum des Sägebandes zugewandten Seite wenigstens eine Auffang- und/oder Ablenkleiste aufweisende Transporteinrichtung für den Abtransport der Schnittware ortsfest angeordnet ist, wobei an der zwischen den vertikalen Sägebandabschnitten ortsfest angeordneten Transporteinrichtung (14) mehrere einzelne Abdeckleisten (16; 30, 31) vorgesehen sind, die in Reihe hintereinander schwenkbar gelagert sind und den Freispalt (42) für das Sägeband (5) abdecken, wobei jene der Abdeckleisten, die sich im Bereich der Bandsäge (1) befinden, unter Freigabe des das Sägeband (5) aufnehmenden Freispaltes (42) angehoben sind.

## Beschreibung

Die Erfindung bezieht sich auf eine Blockbandsägeneinheit, bei welcher das zu schneidende Gut, z.B. Baumstämme, an einer ortsfesten Halterung eingespannt ist und die vertikal schneidend angeordnete Bandsäge entlang des Schneidegutes bewegt wird, und bei welcher zwischen den Umlenkrädern für das Sägeband der Bandsäge eine an der dem aktiven Trum des Sägebandes zugewandten Seite wenigstens eine Auffang- und/oder Ablenkleiste aufweisende Transporteinrichtung für den Abtransport der Schnittware ortsfest angeordnet ist.

Bei Blockbandsägeneinheiten der eingangs genannten Art muß ein Freispalt für den Durchgang des Sägebandes freigehalten sein, welcher in der Regel etwa 2 cm breit ist. In diesen Spalt können dann dünne Bretter und auch Anschnitte, die sogenannten "Schwartlinge", hineingleiten und steckenbleiben, da die abgeschnittenen Bretter die Tendenz haben, vertikal nach unten zu sinken.

Der Erfindung liegt nun die Aufgabe zugrunde eine Einrichtung zu schaffen, bei welcher das Hineinrutschen und Verklemmen von Brettern in den Freispalt verhindert ist. Erfindungsgemäß wird diese Aufgabe dadurch gelöst, daß an der zwischen den vertikalen Sägebandabschnitten ortsfest angeordneten Transporteinrichtung mehrere einzelne Abdeckleisten vorgesehen sind, die in Reihe hintereinander schwenkbar gelagert sind und den Freispalt für das Sägeband abdecken, wobei jene der Abdeckleisten, die sich im Bereich der Bandsage befinden, unter Freigabe des das Sägeband aufnehmenden Freispaltes angehoben sind. Dadurch wird erreicht, daß die von dem Schneidegut herabfallenden Schnittwaren zuverlässig auf die Transporteinrichtung für den Abtransport geleitet werden, wobei in jenen Bereichen, in denen die Schwartlinge zuerst absinken, also in dem von dem Schneidband entfernten Bereich, der Freispalt geschlossen ist.

Vorteilhafterweise können die Abdeckleisten als Zungen oder Klinken ausgebildet sein, die mittels einer mit der Bandsäge verbundenen Anhebeeinrichtung zur Freigabe des Freispaltes angehoben sind. Dadurch wird in besonders einfacher Weise die Steuerung der Anhebung der Zungen oder Klinken erzielt, wodurch sich spezielle Steuermittel erübrigen. Dabei kann die Anhebeeinrichtung durch eine an der Bandsäge angeordnete Steuerkurve oder durch Rollen gebildet sein, wodurch eine besonders zuverlässig arbeitende, wartungsarme Einrichtung erzielt ist. Weiters kann die Transporteinrichtung für den Abtransport der Schnittware als Rollenförderer ausgebildet sein, wobei zwischen benachbarten Rollen zusätzliche Querförderer vorgesehen sein, die im Bereich der Abdeckleiste(n) die Rollen überragen. Dies ermöglicht, daß die abgeschnittenen Teile gesteuert flachgelegt auf den Rollenförderer gelangen. In besonders bevorzugter Weise können die Querförderer als Kettenförderer ausgebildet sein, die von der bzw. den Abdeckleisten schräg nach unten führen und unter die obere Begrenzung der Rollen der Fördereinrichtung reichen. Dadurch wird erreicht, daß die abgeschnittenen Teile von der Schnittfuge und damit dem Wirkungsbereich des Sägebandes zuverlässig weggeführt werden und beim Umfallen oder Wegfördern mit dem Sägeband nicht mehr in Kontakt kommen können.

In weiterer bevorzugter Ausführung kann die Kette des Kettenförderers mit nach außen vorstehenden Mitnehmern versehen sein, wobei diese Mitnehmer nur in einem Teilbereich, Vorzugsweise in einem Drittel, der Kettenlänge vorgesehen sind und wobei die Ketten im wesentlichen zur Gänze unterhalb der oberen Begrenzung der Rollen verlaufen und die vorstehenden Mitnehmer die genannte obere Begrenzung der Rollen überragen. Dadurch wird erreicht, daß nur bestimmte Bereiche des Querförderers tatsächlich in fördernden Eingriff mit der Schnittware kommen können, sodaß ein zuverlässiges Ablegen der Schnittware auf den Rollen erfolgt. Um zu vermeiden, daß bei sehr breiten abgeschnittenen Teilen diese seitlich über die Rollen herausgleiten oder abrutschen können, kann an dem der Abdeckleiste bzw. -leisten gegenüberliegenden Randbereich des Rollenförderers eine oder mehrere Anschläge, z.B. eine durchgehende Anschlagleiste, angeordnet sein. Das durch den Querförderer seitlich weggeförderte abgeschnitte Brett wird dann bis zu dieser Anschlagleiste mitgenommen und gegen weitere Querverschiebung gehindert, wodurch die Mitnehmer an der Unterseite des Brettes durchrutschen, bis dann der Mitnehmerfreibereich des Kettenförderers unterhalb der Schnittware zu liegen kommt, wodurch der Querförderer den Abtransport der Schnittware nicht mehr beeinflussen kann.

Zur Erreichung einer platzsparenden Ausbildung kann die der Bandsäge gegenüberliegende ortsfeste Halterung über eine Absenkeinrichtung beschickbar sein, wobei die Auflager der Absenkeinrichtung an sich bekannte Stammwendegeräte mit vorzugsweise V-förmig angeordneten Kettenarmen sind. Damit wird erreicht, daß einerseits eine stoßfreie Zuführung des Schneidegutes erzielt ist und anderseits während dieser Absenkung das zu schneidende Gut so entlang seiner Längsachse gedreht werden kann, daß es in der günstigsten Schneideposition an die ortsfeste Halterung angehängt werden kann. Dabei kann der Absenkeinrichtung ein Werkstückpolter vorgeschaltet sein, welcher über der ortsfesten Halterung zur Absenkeinrichtung führt, wodurch sich aufwendige Transporteinrichtungen für das Schneidegut erübrigen, da die zu schneidenden Baumstämme quer zur Längsrichtung über den Werkstückpolter herangerollt werden können.

In der Zeichnung sind zwei Ausführungsbeispiele des Erfindungsgegenstandes dargestellt.
Fig. 1 zeigt eine Seitenansicht der ersten Ausführungsvariante der gesamten Blockbandsägeneinheit.
Fig. 2 ist eine Draufsicht auf dieselbe.
Fig. 3 gibt eine Stirnansicht wieder, wobei die Tragschienen, auf welchen die Bandsäge verschiebbar ist, geschnitten sind.
Fig. 4 zeigt eine Seitenansicht des Sägeteiles bei weggenommenem Abtransportrollgang für die Schnittware.
Fig. 5 gibt eine Draufsicht auf die Bandsäge gemäß Fig. 4 wieder.
Fig. 6 - 9 zeigt schematisch den Ablauf der Beschickung der Maschine bis zum Schneidvorgang.
Fig. 10 zeigt in kleinerem Maßstab eine in bezug auf die Abtransporteinrichtung für die Schnittware abgeänderte Ausführung.
Fig. 11 gibt diese weitere Ausführungsvariante in Draufsicht wieder.
Fig. 12 ist in größerem Maßstab ein Schnitt nach Linie A-A der Fig. 11,
Fig. 13 ein Schnitt nach Linie B-B der Fig. 11, und
Fig. 14 in noch größerem Maßstab ein Schnitt nach Linie C-C. Die
Fig. 15 bis 17 geben den Ablauf des Abtransportes der Schnittware von der Bandsäge auf die Abtransporteinrichtung für die Schnittware wieder.
Fig. 18 veranschaulicht die Stellung der einzelnen Teile der Abdeckeinrichtung für den Freispalt, wobei
Fig. 19 in Gegenüberstellung die Ausbildung mit einer starren Ablenkleiste zeigt.
Fig. 20 veranschaulicht die Abdeckeinrichtung für den Freispalt in größerem Detail, wobei das Sägeblatt zur Veranschaulichung angedeutet ist.
Fig. 21 gibt die Ablenkeinrichtung schematisch wieder, u.zw. in einer der Fig. 14 analogen, jedoch verkleinerten Darstellung.
Fig. 22 zeigt in deutlich größerem Maßstab eine Ansicht in Richtung des Pfeiles B der Fig. 21 gesehen.
Fig. 23 stellt eine Ansicht in Richtung des Pfeiles A der Fig. 21 gesehen, ebenfalls in vergrößertem Maßstab dar.

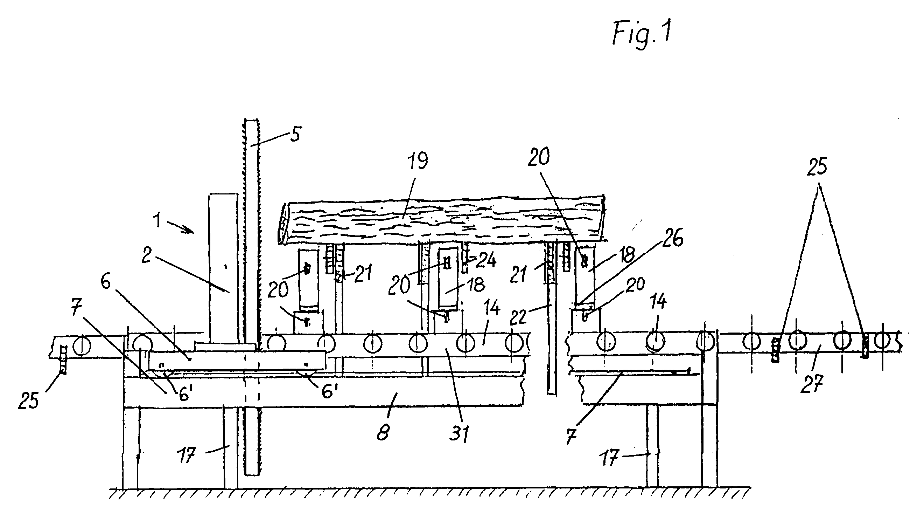

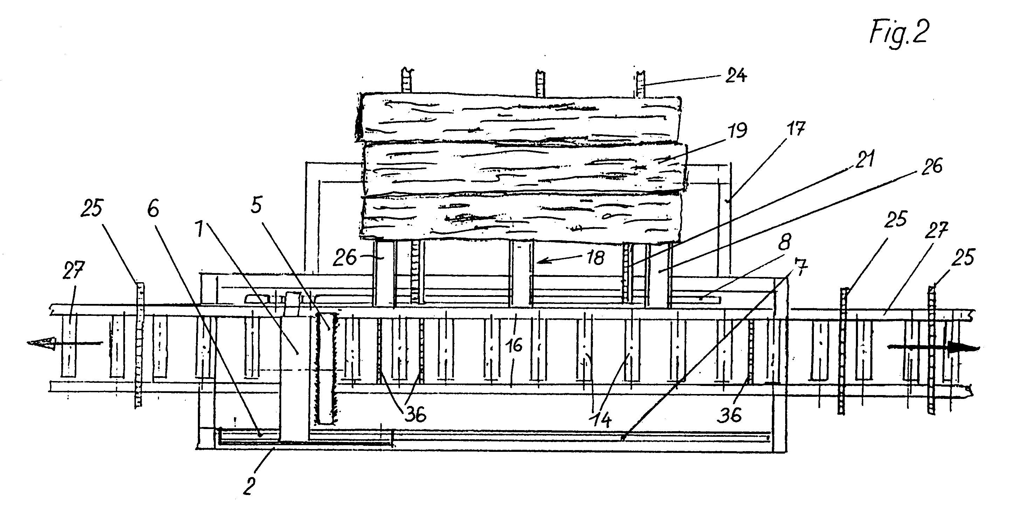

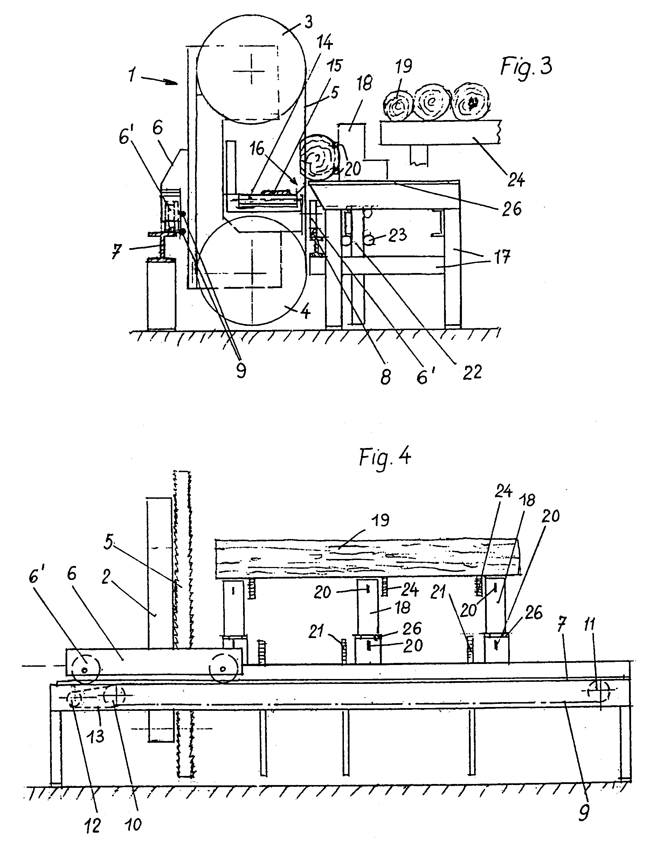

Bei der Ausführungsvariantge gemäß Fig. 1 - 9 ist mit 1 die Bandsäge bezeichnet, welche an einem Maschinenständer 2 Umlenkräder 3, 4 für ein Sägeband 5 aufweist, welches an seinen beiden Längskanten mit Sägezähnen versehen ist, sodaß das Sägeband an beiden Längsseiten wirksam ist. Der Maschinenständer 2 ist auf einem Wagen 6 angeordnet, welcher über Rollen 6' auf Schienen 7, 8 verfahrbar gelagert ist. Diese Schienen 7, 8 sind mittels Stahlträger am Rahmengestell der Gesamteinheit fest angeordnet. Für den Vorschub des Wagens 6 ist ein Antriebsseil 9 vorgesehen, das über Umlenkrollen 10, 11 geführt ist und mit dem Wagen 6 fest verbunden ist. Das Antriebsseil ist über einen Antriebsmotor 12 bewegbar, wobei der Antriebsmotor über einen Kettentrieb 13 mit einer der Umlenkrollen 10, 11, vorliegend die Rolle 10, fest verbunden ist. Die Anordnung, das Schneidegut ortsfest zu haltern und die Bandsäge entlang zu bewegen, hat den Vorteil, daß einerseits eine geringere Masse zu bewegen ist und anderseits wesentlich weniger Platzbedarf gegeben ist, da zusätzlich zur einfachen Länge des Schneidegutes nur jeweils ein Meter etwa benötigt wird, um das Sägeband erneut anzusetzen und das nächste Brett abzuschneiden.

Zwischen die Umlenkräder 3, 4 des Sägebandes 5 greift eine Fördereinrichtung 14 für den Abtransport der Schnittware 15 ein, d.h. daß über die gesamte Lange der Bewegungsbahn des Wagens 6 die Fördereinrichtung 14, vorliegend als Rollengang ausgebildet, reicht, wobei die Halterungen für die Rollen des Rollenganges zwischen dem aktiven Trum und dem Maschinenständer 2 hindurchragen. Dem aktiven Trum des Sägebandes 5 benachbart ist eine Ablenkleiste 16 für die Schnittware 15 vorgesehen, mit welcher das nach dem Schneiden abgelöste Brett auf die Fördereinrichtung 14 gelenkt wird. Die Rollen der Fördereinrichtung 14 sind über eine nicht dargestellte, auf Kettenrädern 28 laufende Kette angetrieben.

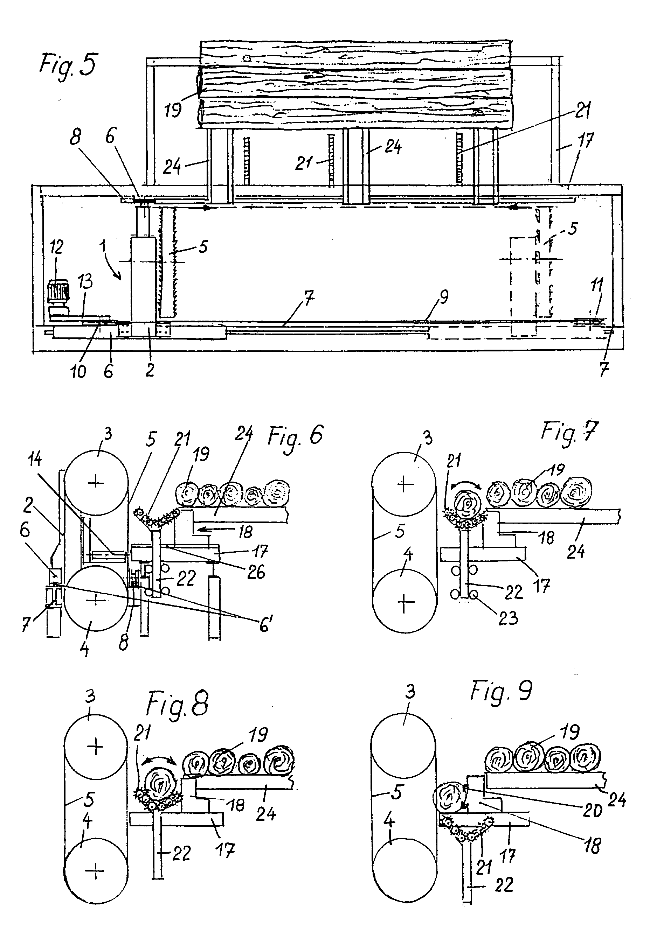

An die Bandsäge 1 reicht ein Rahmen 17 heran, auf welchem eine Halteeinrichtung 18 für das zu schneidende Gut 19 angeordnet ist. Diese Halterung weist Haltezangen 20 auf, die in herkömmlicher Weise, z.B. mittels Schraubspindel oder mittels Hydraulikzylindern, zusammenspannbar sind, um den zu schneidenden Baumstamm sicher festzuhalten. Der Baumstamm wird dabei durch das Auflager 26 gegen Abrutschen gehalten. Die Zufuhr des zu schneidenden Baumstammes 19 erfolgt über eine Absenkeinrichtung 21, welche eine Stammdreheinrichtung aufweist, die, wie aus den Fig. 6 - 9 erkennbar, als V-förmige Aufnahme ausgebildet ist, in welcher mittels Kettenantriebes od.dgl. der Baumstamm in die gewünschte Lage gedreht werden kann. Diese Absenkeinrichtung 21 weist einen Führungsstab 22 auf, der durch Führungsrollen 23 vertikal bewegbar geführt ist. Die Antriebseinrichtung für diese Absenkeinrichtung ist hier nicht im Detail dargestellt.

Dieser Absenkeinrichtung 21 werden die Baumstämme 10 über einen Werkstückpolter 24 zugeführt, auf welchem die Baumstämme quer zu ihrer Längserstreckung herangerollt und dann einzeln auf die Absenkeinrichtung 21 abgegegeben werden.

Die Fördereinrichtung 27, welche gegebenenfalls beidseitig an die Fördereinrichtung 14 für den Abtransport der Schnittware anschließt, ist im vorliegenden Ausführungsbeispiel gleichfalls als Rollengang ausgebildet, könnte jedoch in gleicher Weise auch ein Förderband od.dgl. sein. Bei dieser Fördereinrichtung 27 sind auch noch Querförderer 25 vorgesehen, mittels welcher dann die geschnittenen Bretter, falls erforderlich, quer zur Fahrtrichtung des Wagens 6 von dem Förderer 27 abtransportiert werden können.

Im Betrieb der Vorrichtung wird zunächst der Wagen 6 der Bandsäge 1 in eine Endstellung gefahren, wobei es im Hinblick auf die beidseitige Arbeitsfähigkeit des Sägebandes 5 unerheblich ist, in welche der Endstellungen der Sägewagen 6 verbracht wird. Danach wird das zu schneidende Gut 19 über die Absenkeinrichtung 21 in Position auf dem Auflager 26 gebracht und mittels der Haltezangen 20 der Halteeinrichtung 18 in der gewünschten Lage festgehalten. Danach wird der Vorschub der Bandsäge 1 eingeschaltet und die Bandsäge den Block entlang bewegt, wobei das entsprechende Brett oder die entsprechende Schnittware abgeschnitten wird. Diese Schnittware fällt dann, nach Beendigung des Schnittvorganges, über die Ablenkleiste 16 auf die Fördereinrichtung 14 und wird von dieser in die jeweils gewünschte Richtung abtransportiert. Der Vorschub der Bandsäge 1 wird dann umgekehrt und die Halteeinrichtung 18 um die gewünschte Schnittdicke in Richtung zur Bandsäge vorgeschoben, wodurch das Werkstück für den nächsten Schritt bereit ist. Bei der Retourfahrt der Bandsäge 1 wird das entsprechende Brett abgeschnitten und in gleicher Weise abtransportiert.

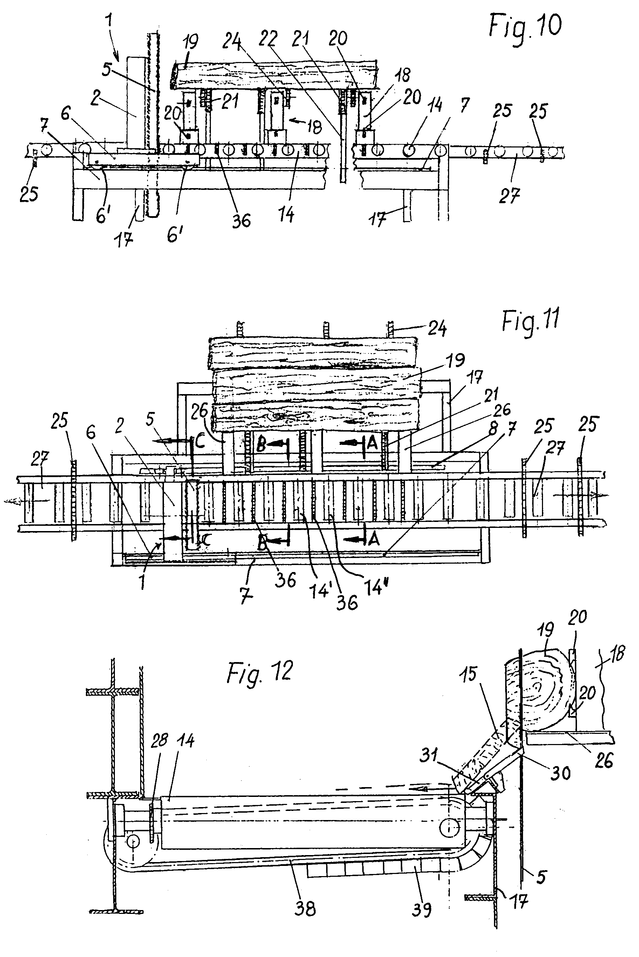

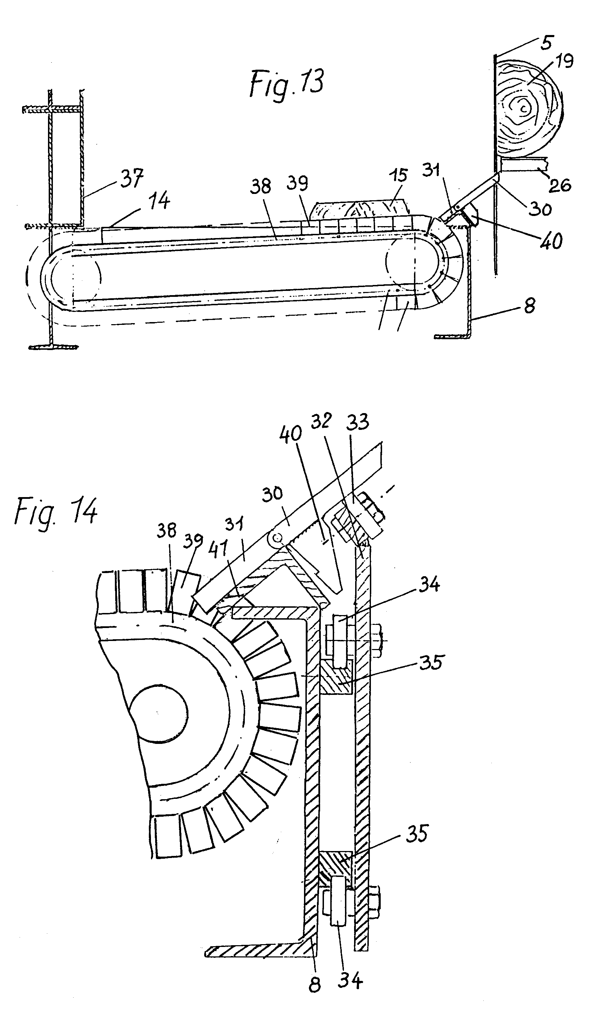

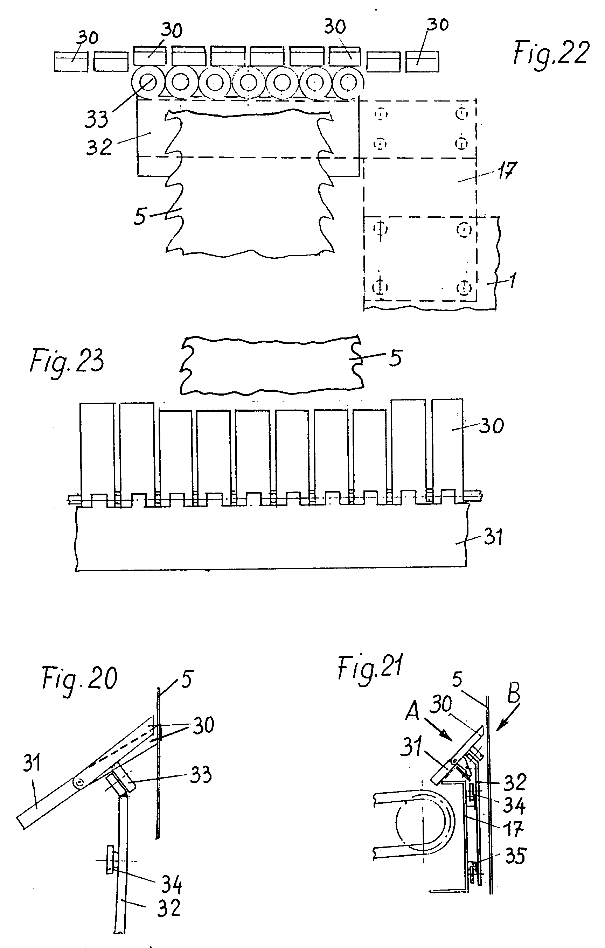

Beim Ausführungsbeispiel nach den Fig. 10 - 23 sind die gleichen Maschinenteile mit gleichen Bezugszeichen wie in dem ersten Ausführungsbeispiel versehen. Das zweite Ausführungsbeispiel unterscheidet sich vom ersten dadurch, daß die Einrichtung zur Abfuhr der Schnittware modifiziert ist. So ist anstelle der Ablenkleiste 16 eine Reihe von schwenkbar gelagerten Klinken 30 vorgesehen, welche an einem festen Teil 31 gelagert sind, welch letzterer am Rahmen 17 angebracht ist. Die Klinken bzw. Zungen 30 sind dabei von der Halteleiste 31 schräg nach oben wegstehend gelagert und liegen entweder am gegenüberliegenden Begrenzungsteil des für den Durchgang des Sägebandes 5 erforderlichen Freispaltes 42 an, u.zw. unter vollständiger Abdeckung des Freispaltes 42 oder es weist, wie dargestellt, die Zunge 30 an der Unterseite einen Anschlag 40 auf, welcher sich an eine am oberen Rand der Führung 8 angeordnete Leiste 41 anlegt und die Abwärtsbewegung der Zunge 30 begrenzt.. Damit das Sägeband 5 an der Abdeckeinrichtung vorbeibewegt werden kann, sind die Klinken 30 über einen Rollengang 32 anhebbar, welcher mit der Bandsäge 1 mitbewegbar ist. Bevorzugt ist dieser Rollengang am Wagen 6 für die Bandsäge befestigt, wobei die Rollen 33 des Rollenganges an der Unterseite der Klinken 30 bewegt werden und diese im Bereich des Sägebandes 5 nach oben verschwenken, wodurch der Freispalt im Bereich des Sägebandes 5 freigelegt wird. An der Rückseite des Sägebandes schließt sich dann der Freispalt durch das Abwärtssenken der Klinken bzw. Zungen 30 selbsttätig aufgrund des Eigengewichtes der Klinken bzw. Zungen 30. Wie in Fig. 14 wiedergegeben, wird der Rollenwagen 32 an der Rückseite des Rahmens 17 verschiebbar geführt, u.zw. über Rollen 34, welche in entsprechende Führungen 35 am Rahmen 17 eingreifen.

Um die Schnittware 15 zuverlässig von dem Schnittbereich wegzuführen, sind zusätzliche Querförderer 36 vorgesehen, welche zwischen den Rollen des Förderers 14 angeordnet sind. Die Verbindungslinie zwischen den beiden Umlenkrollen der Kettenförderer sind in bezug auf die Längsachse der Rollen 14' schräg nach unten verlaufend, u.zw. ausgehend von der Halteleiste 31 für die Klinken 30 und führen dort in Richtung zu einem gegenüberliegenden Anschlag 37 schräg nach unten.

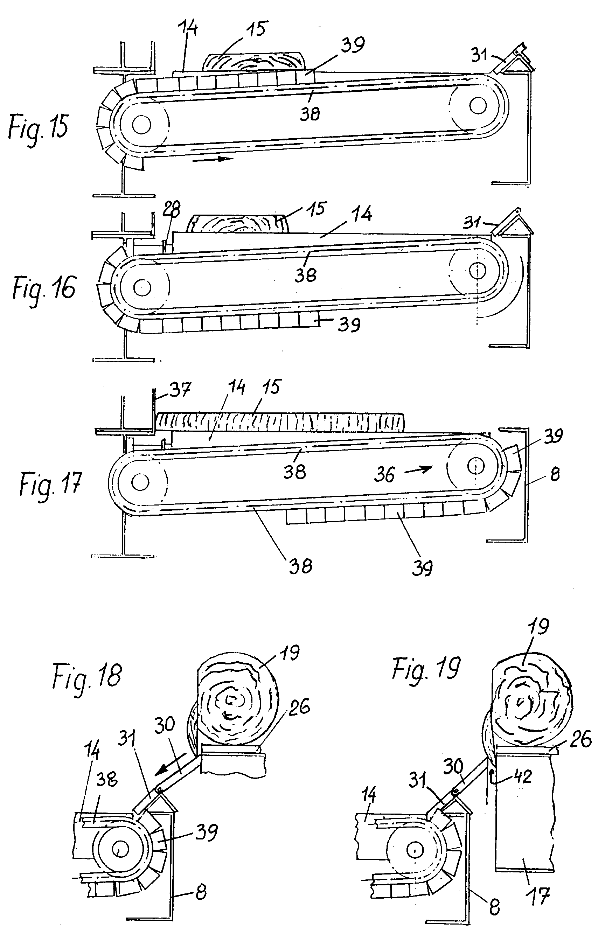

Bei dem vorliegenden Ausführungsbeispiel sind an den Ketten 38 des Kettenförderers 36 Mitnehmer vorgesehen, welche in der Ebene des Kettenförderers radial nach außen abstehen. Diese Mitnehmer 39 sind nur etwa in einem Drittel der Gesamtlänge der Kette vorgesehen, wobei die Kette als solche immer unterhalb der oberen Begrenzungen der Rollen 14 liegen. Lediglich die Mitnehmer ragen über die obere Begrenzung der Rollen über Teilbereiche der Länge der Rollen nach oben. Dies hat den Sinn, daß von der Schneideware 19 abgeschnittene Schnittware 15 über die Klinken 30 und die Halteleiste 31 auf die Auflager 39 der Kettenförderer 36 abgelegt werden und durch Betätigung der Kettenförderer von dem Sägeblatt 5 zu dem Anschlag 37 hin gefördert werden. Ist, wie in Fig. 15 dargestellt, die Schnittware schmal, dann bleibt die Schnittware auf den Rollen 14' liegen, sobald die Mitnehmer 39 unterhalb der oberen Begrenzung der Rollen 14' zu liegen kommen. Bei einem größeren Brett, wie beispielsweise in Fig. 17 wiedergegeben, würde dies nicht ausreichen, da durch die Breite der Schnittware 15 fast die gesamte Lange der Rolle 14 beansprucht wird. In diesem Fall wird die Schnittware 15 bis an den Anschlag 37 herangeführt und dann durch Weiterbewegen der Kette 38 die Mitnehmer 39 unter der Schnittware wegbewegt, bis unterhalb der Schnittware nur noch die Ketten 38 des Kettenförderers vorhanden sind, also die Schnittware 15 zur Gänze auf den Rollen 14' aufliegen kann.

Diese erfordert natürlich eine Abstimmung der Bewegung der Querförderer 36, nämlich dahingehend, daß die Förderer sobald die Schnittware 15 auf den Rollen 14' abgelegt ist, zum Stillstand kommen, u.zw. in der in Fig. 17 wiedergegebenen Lage und erst wieder in Aktion treten, wenn das nächste Stück der Schnittware 15 über die Klinken 30 und die Halteleiste 31 auf den Kettenförderer 36 abgleiten kann.

In den Fig. 18 und 19 werden die beiden Ausführungen einander gegenübergestellt, wobei die Fig. 19 die erste Ausführungsvariante mit starrer Ablenkleiste 16 zeigt und die Gefahr andeutet, welche z.B. beim Schneiden von Schwartlingen oder sonstigem dünnem Material auftreten kann, nämlich daß die abgleitende Schnittware in den Freispalt hineinfallen und darinnen steckenbleiben kann. Es muß dann die Schnittware händisch aus dem Freispalt entfernt werden. Die Fig. 18 zeigt, wie die verbesserte zweite Ausführungsvariante das Problem löst, nämlich dahingehend, daß mit Ausnahme im Bereich des Sägebandes 5 der Freispalt durch die Klinken bzw. Zungen 30 abgedeckt ist, sodaß die herabfallende Schnittware 15 über die Klinken bzw. Zungen 30, die Halteleiste 31, direkt auf den Kettenförderer 36 abgleitet, wobei selbst im Falle eines Abstützens auf der Rolle 14 des Förderers ein Umlegen dann erfolgt, bis die Mitnehmer 39 von unten her gegen die Schnittware 15 bewegt werden und diese Schnittware dann soweit mitnehmen, daß sie - wie in den Fig. 15 - 17 dargestellt - auf den Rollen 14 des Förderers ordnungsgemäß aufliegen.

Wie beschrieben, erfüllt somit die erfindungsgemäße Bandsägeneinheit die Vorteile sowohl der Fahrbahnsäge als auch der vertikalen Anordnung der Säge, da einerseits lediglich jener Platz benötigt wird, um die Bandsäge vom Vorschub des Schneidegutes 19 freizumachen und anderseits das geschnittene Gut selbsttätig auf die Abtransporteinrichtung fällt.

## Patentansprüche

1. Blockbandsägeneinheit, bei welcher das zu schneidende Gut, z.B. Baumstämme, an einer ortsfesten Halterung eingespannt ist und die vertikal schneidend angeordnete Bandsäge entlang des Schneidegutes bewegt wird, und bei welcher zwischen den Umlenkrädern für das Sägeband der Bandsäge eine an der dem aktiven Trum des Sägebandes zugewandten Seite wenigstens eine Auffang- und/oder Ablenkleiste aufweisende Transporteinrichtung für den Abtransport der Schnittware ortsfest angeordnet ist, dadurch gekennzeichnet, daß an der zwischen den vertikalen Sägebandabschnitten ortsfest angeordneten Transporteinrichtung (14) mehrere einzelne Abdeckleisten (16; 30, 31) vorgesehen sind, die in Reihe hintereinander schwenkbar gelagert sind und den Freispalt (42) für das Sägeband (5) abdecken, wobei jene der Abdeckleisten, die sich im Bereich der Bandsäge (1) befinden, unter Freigabe des das Sägeband (5) aufnehmenden Freispaltes (42) angehoben sind.

2. Blockbandsägeneinheit nach Anspruch 1, dadurch gekennzeichnet, daß die Abdeckleisten als Zungen oder Klinken (30) ausgebildet sind, die mittels einer mit der Bandsäge (1) verbundenen Anhebeeinrichtung (33) zur Freigabe des Freispaltes anhebbar sind.

3. Blockbandsägeneinheit nach Anspruch 2, dadurch gekennzeichnet, daß die Anhebeeinrichtung durch eine an der Bandsage (1) vorgesehene Steuerkurve oder durch Rollen (33) gebildet ist.

4. Blockbandsägeneinheit nach einem der Ansprüche 1 bis 3, dadurch gekennzeichnet, daß die Transporteinrichtung (14) für den Abtransport der Schnittware (15) als Rollenförderer ausgebildet ist, wobei zwischen benachbarten Rollen (14', 14'') zusätzliche Querförderer (36) vorgesehen sind, die im Bereich der Abdeckleisten bzw. -leisten (16; 30, 31) die Rollen des Rollenförderers (14) überragen.

5. Blockbandsägeneinheit nach Anspruch 4, dadurch gekennzeichnet, daß die Querförderer (36) als Kettenförderer ausgebildet sind, die von der Abdeckleiste bzw. -leisten (16; 30, 31) schräg nach unten führen und unter die obere Begrenzung der Rollen der Fördereinrichtung (14) reichen.

6. Blockbandsägeneinheit nach Anspruch 5, dadurch gekennzeichnet, daß die Kette (38) des Kettenförderers (36) mit nach außen vorstehenden Mitnehmern (39) versehen ist, wobei diese Mitnehmer (39) nur in einem Teilbereich, vorzugsweise einem Drittel der Kettenlänge vorgesehen sind und wobei die Ketten (38) im wesentlichen zur Gänze unterhalb der oberen Begrenzung der Rollen (14) verlaufen und die vorstehenden Mitnehmer (39) die genannte obere Begrenzung der Rollen (14) überragen.

7. Blockbandsägeneinheit nach einem der Ansprüche 4 bis 6, dadurch gekennzeichnet, daß an dem der Abdeckleiste bzw. -leisten (16; 30, 31) gegenüberliegenden Randbereich des Rollenförderers (14) eine oder mehrere Anschläge, z.B. eine durchgehende Anschlagleiste (37), angeordnet ist.

8. Blockbandsägeneinheit nach einem der Ansprüche 1 bis 7, dadurch gekennzeichnet, daß die der Bandsäge (1) gegenüberliegende ortsfeste Halterung (18) über eine Absenkeinrichtung (21) beschickbar ist, wobei die Auflager der Absenkeinrichtung (21) an sich bekannte Stammwendegeräte mit vorzugsweise V-förmig angeordneten Kettenarmen sind.

9. Blockbandsägeneinheit nach Anspruch 8, dadurch gekennzeichnet, daß der Absenkeinrichtung (21) ein Werkstückpolter (24) vorgeschaltet ist, welcher über der ortsfesten Halterung (18) zu der Absenkeinrichtung (21) führt.
